# EUROPÄISCHE PATENTSCHRIFT

(11) **EP 1 647 432 B1**
(45) Veröffentlichungstag und Bekanntmachung des Hinweises auf die Patenterteilung: **19.01.2011**
(21) Anmeldenummer: 05022186.0
(22) Anmeldetag: 12.10.2005
(51) Int. Cl.: B60J 7/14, B60J 7/12

(54) **Kraftfahrzeug mit einem vorderen Dachteil**
Motor vehicle with a front roof panel
Véhicule automobile avec un panneau antérieur de toit

(30) Priorität: 15.10.2004 DE 102004050509
(43) Veröffentlichungstag der Anmeldung: 19.04.2006
(73) Patentinhaber: Wilhelm Karmann GmbH, 49084 Osnabrück (DE)
(72) Erfinder: Hilbk, Holger, 49201 Dissen (DE)
(74) Vertreter: Kronthaler, Schmidt & Coll.

(56) Entgegenhaltungen:
- EP-A- 0 999 079
- DE-A1- 3 930 343
- DE-A1- 10 227 891
- DE-A1- 10 326 861
- DE-C1- 19 634 507
- US-A- 3 473 842
- US-A1- 2002 074 832

## Beschreibung

Die Erfindung betrifft ein Kraftfahrzeug mit einem vorderen Dachteil, der einen zwischen seitlichen Rahmenteilen separat in eine Teilöffnungsstellung beweglichen mittleren Dachabschnitt umfaßt.

Die DE 102 27 891 A1 zeigt ein Cabriolet-Fahrzeug mit einem vorderen Dachteil, bei dem ein in Fahrzeugquerrichtung mittlerer Dachabschnitt in einer Teilöffnung nach hinten verlagerbar ist und während der weitergehenden Dachöffnung seitliche Rahmenteile des vorderen Dachteils nach innen hin in eine Querstellung vor einem dahinter liegenden Dachteil einschwenken. Dabei sind die Rahmenteile zu lang, um eine nur bis zur Fahrzeugquermitte reichende Stellung einzunehmen und müssen somit einander überlappen, was eine gleichartige und konstruktiv einfache Bewegung der Rahmenteile beider Seiten ausschließt und aufgrund der Übereinanderlage im mittleren Bereich eine gegenüber dem hinteren Dachteil vergrößerte Höhenerstreckung verursacht. Durch die Lage der Rahmenteile vor dem hinteren Dachteil ist dieses zudem für seine weitere Ablage verlängert um die quer liegenden Rahmenteile, so daß der Raumbedarf bei der Ablage erhöht ist.

Eine ähnliche Ausbildung ist in der DE 196 34 507 C1 gezeigt.

Die EP 0 999 079 A2 zeigt eine Möglichkeit, seitliche Dachrahmen heckwärts und abwärts in seitliche Säulen des dahinter liegenden Dachteils einzuziehen. Dabei ist jedoch eine Querschnittsverringerung durch Einfalten der seitlichen Dachrahmen erforderlich, um dieses Hineinziehen zu ermöglichen. Dies erfordert eine aufwendige Faltungsmechanik. Der hintere Dachsteil ist gemäß dieser Schrift fest stehend. Wenn dieser - wie in der erfindungsgemäßen Ausbildung - auch noch ablegbar sein sollte, könnte dies nur dann problemarm funktionieren, wenn die Dachrahmen kürzer als die Längserstreckung des hinteren Dachteils sind. Der vordere Dachteil müßte dann sehr kurz sein.

Die US 2002/0074832 A1 zeigt einteilige seitliche Rahmenteile 8 von so erheblicher Längserstreckung, daß für diese spezielle Ablageräume seitlich in der Karosserie geschaffen werden müssen und diese nur bei Fahrzeugen mit einem langen Stufenheck zum Einsatz kommen können. Die Rahmenteile sind nur in einer vertikalen Längsebene des Fahrzeugs verlagerbar.

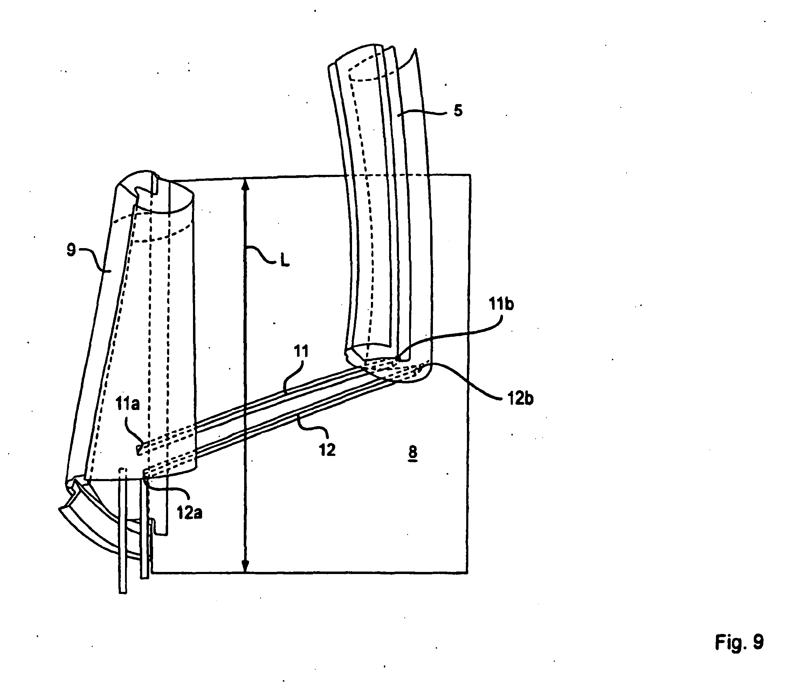

Gemäß der DE 39 30 343 A1 sind seitliche Rahmenteile 22 des vorderen Dachteils nur dann separat vom mittleren Teil 15 beweglich, wenn die Rahmenteile manuell entnommen oder wieder eingesetzt werden. In der weiteren Version nach Fig. 9 ist dort keine separate Bewegung von seitlichen Rahmenteilen bei bereits geöffnetem Mittelteil möglich.

Der Erfindung liegt das Problem zugrunde, bei einem gattungsgemäßen Kraftfahrzeug eine Verbesserung der Ablagekinematik zu erreichen.

Die Erfindung löst dieses Problem durch ein Kraftfahrzeug mit den Merkmalen des Anspruchs 1. Vorteilhafte Ausgestaltungen und Weiterbildungen der Erfindung sind in den weiteren Ansprüchen 2 bis 12 angegeben.

Mit der erfindungsgemäßen Ablage der seitlichen Rahmenteile ist der bei geschlossenem Dach hinter diesen folgende Dachteil in seiner Längenerstreckung nicht vergrößert. Bei einer vollständigen Dachöffnung ist daher der benötigte Stauraum in Fahrzeuglängsrichtung verkleinert. Bei einer Dachöffnung nach Art eines Targafahrzeugs ist zudem der geöffnete Kopfraum vergrößert. Dadurch, daß die seitlichen Rahmenteile über seitlichen Säulen des dahinter liegenden Dachteils zugeordnete Gestängeteile beweglich sind, kann bei der Verlagerung je nach Gestängeausbildung die Verlagerung mit einer Komponente seitlich einwärts so weit erfolgen, daß die Rahmenteile raumsparend plaziert werden können. Es kann ein erheblicher Querabstand der eingeschwenkten Rahmenteile zu den Querrandbereichen des hinteren Dachteils erreicht werden. Dadurch können die Rahmenteile dann in dem durch die Wölbung einer Heckscheibe unter dieser gebildeten Raum liegen, ohne die Dicke des hinteren Dachteils wesentlich zu vergrößern.

die seitliche Einwärtsverlagerung ermöglicht zudem die Verlagerung der Rahmenteile als ganzes, also ohne ein vorheriges Einfalten.

Eine vorteilhafte Verlagerbarkeit der seitlichen Rahmenteile über Schwenkbewegungen stellt sicher, daß Verkantungen bei der Bewegung ausgeschlossen sind und konstruktiv einfache Schwenkgelenke verwendet werden können.

Wenn die Gestängeteile gegenüber den seitlichen Säulen und die seitlichen Rahmenteile gegenüber den Gestängeteilen schwenkbar sind und die Schwenkachsen der Gestängeteile gegenüber den seitlichen Säulen und die Schwenkachsen der seitlichen Rahmenteile gegenüber den Gestängeteilen sich in einem Punkt schneiden, ist insgesamt ein räumliches Getriebe geschaffen, bei dem ein flüssiger Bewegungsablauf mit gleichzeitiger Einwärts- und Abwärtsverlagerung der seitlichen Rahmenteile ermöglicht ist, ohne daß hierfür weitere Maßnahmen erforderlich wären. Alle Gelenke können als konstruktiv einfache reine Schwenkgelenke mit jeweils einem Freiheitsgrad ausgeführt werden.

Besonders einfach sind jeweils zwei Gestängeteile zwischen seitlichen Säulen des hinteren Dachteils und den seitlichen Rahmenteilen angeordnet, so daß insgesamt ein viergelenk gebildet ist.

Wenn die beiden seitlichen Rahmenteile in ihrem vorderen Bereich über eine Querkopplung miteinander verbunden sind, reicht bei einem gebildeten sphärischen Getriebe ein einziger Antrieb zur Bewegung der Rahmenteile beider Seiten aus.

Insbesondere kann vorteilhaft das erfindungsgemäße Fahrzeug auch eine vollständige Dachöffnung aus der Teilöffnungsstellung heraus ermöglichen.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:
- Fig. 1: eine erfindungsgemäßes Fahrzeug in schema- tischer Seitenansicht bei geschlossenem Dach,
- Fig. 2: eine Einzelteildarstellung des Daches in Stellung nach Fig. 1 mit zusätzlich gestri- chelt eingezeichneten und eigentlich in dieser Ansicht verdeckten Gestängeteilen,
- Fig. 3: eine ähnliche Ansicht wie Fig. 2 in Teil- öffnungsstellung mit nach hinten verlager- tem mittlerem Dachabschnitt bei noch in Ausgangsstellung verbleibenden seitlichen Rahmenteilen,

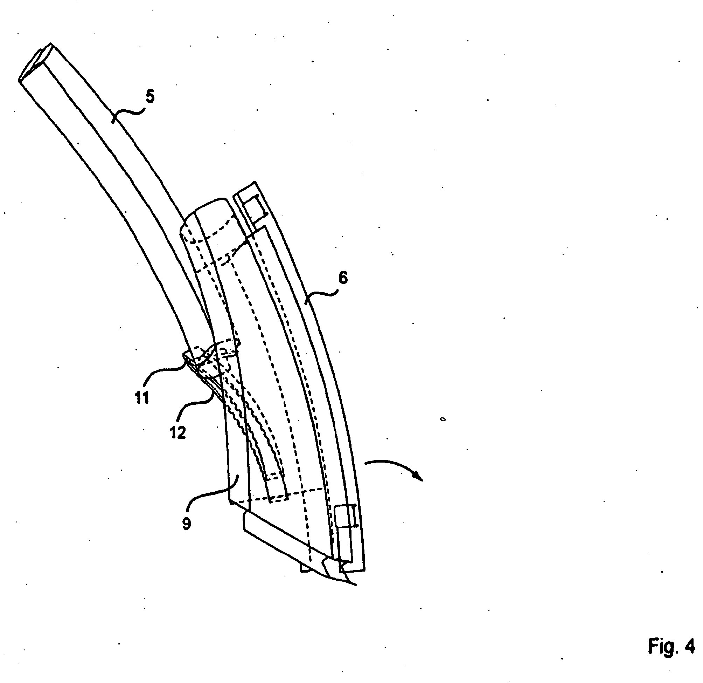

- Fig. 4: eine ähnliche Ansicht wie Fig. 3 bei weite- rer Dachöffnung mit gleichzeitigem Absenken des hinteren Dachteils und Einschwenken der seitlichen Rahmenteile des vorderen Dach- teils unter den hinteren Dachteil,

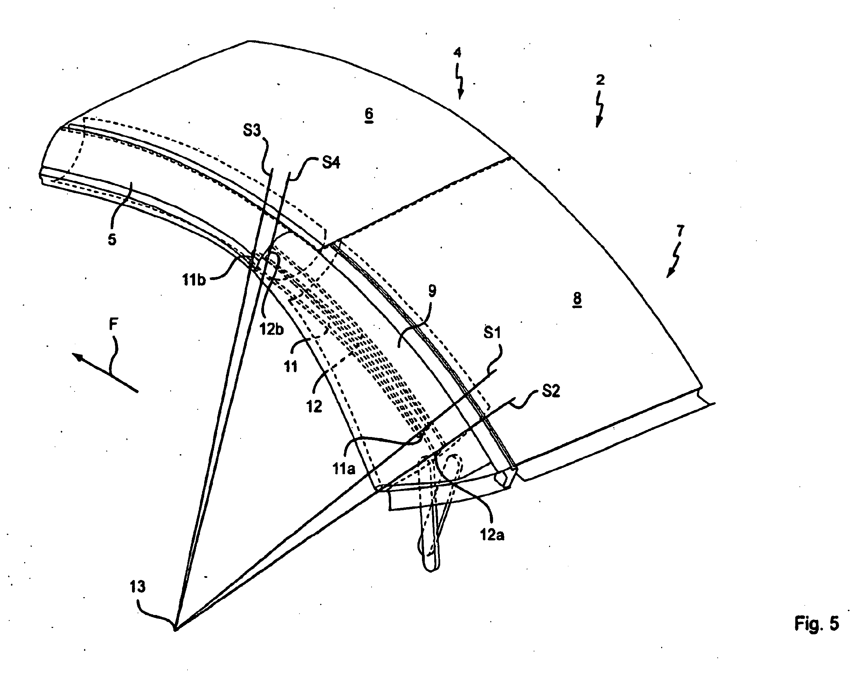

- Fig. 5: das Dach in Stellung nach Fig. 2 in an der vertikalen Längsmittelebene abgebrochener, perspektivischer Ansicht von schräg hinten,

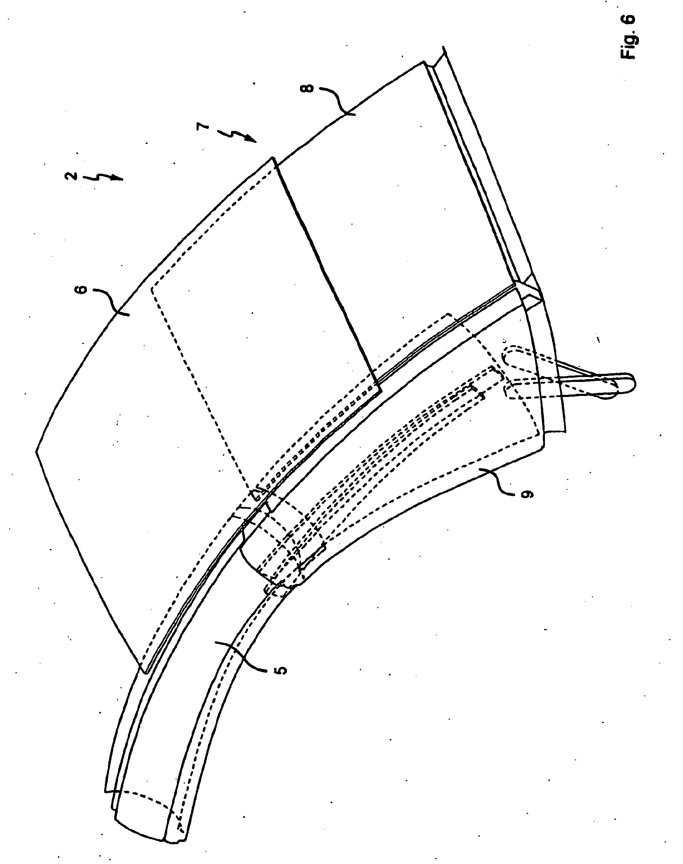

- Fig. 6: eine ähnliche Ansicht wie Fig. 5 während der Öffnung des mittleren Dachabschnitts der vorderen Dachteils,

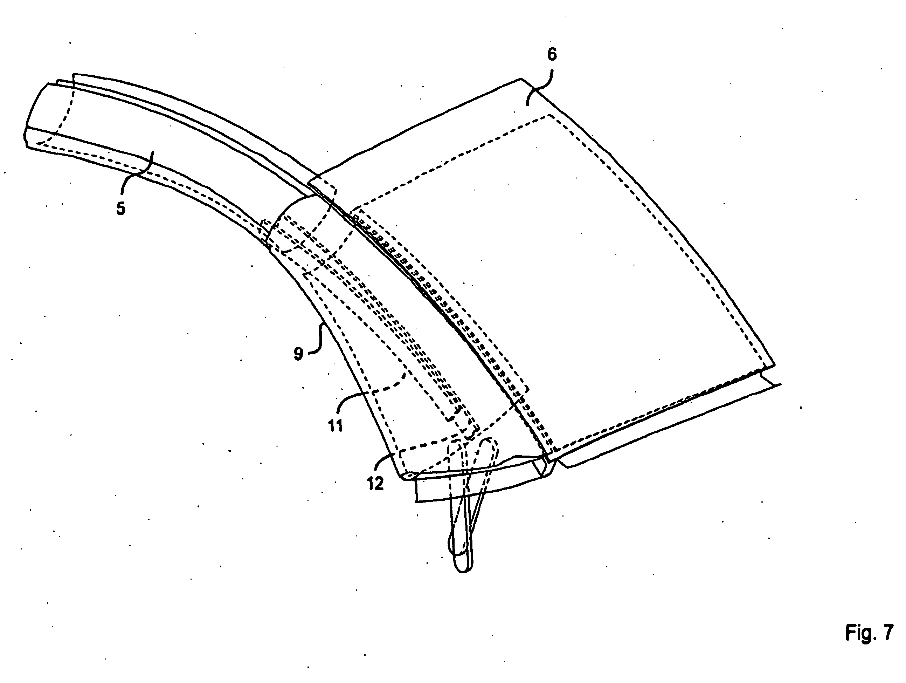

- Fig. 7: eine ähnliche Ansicht wie Fig. 6 des Daches in Stellung nach Fig. 3,

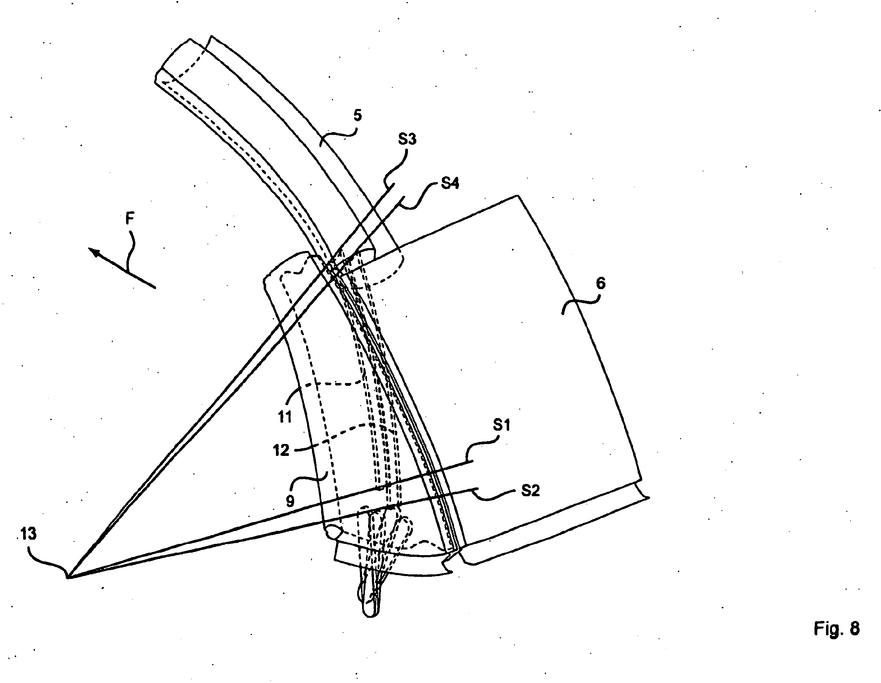

- Fig. 8: eine ähnliche Ansicht wie Fig. 7 während des Einschwenkens des seitlichen Rahmen- teils über die Gestängeteile des hinteren Dachteils,
- Fig. 9: eine Ansicht auf die rechte Hälfte des hin- teren Dachteils von vorne unten während des weiteren Einschwenken des Rahmenteils,
- Fig. 10: eine Ansicht auf die linke Hälfte des hin- teren Dachteils von vorne unten bei voll- ständig in Teilöffnungsstellung einge- schwenktem seitlichem Rahmenteil.

Das erfindungsgemäße Kraftfahrzeug 1 ist im gezeichneten Ausführungsbeispiel als Vollcabriolet-Fahrzeug ausgebildet und hierzu mit einem vollständig öffnungsfähigen und in die Karosserie 3 absenkbaren Dach 2 versehen. Alternativ ist auch ein Fahrzeug mit einem nur im vorderen Bereich öffnungsfähigen Dach und festem hinterem Dachteil möglich. Der Dach 2 umfaßt hier einen separat öffnungsfähigen vorderen Dachteil 4, wobei alternativ auch mehrere hintereinander möglich wären, der seitliche Rahmenteile 5 und einen getrennten mittleren Dachabschnitt 6 umfaßt. Dieser deckt bei geschlossenem Dach 2 den in Fahrzeugquerrichtung zwischen den Rahmenteilen 5 liegenden Bereich ab und kann auch seitlich die Rahmenteile 5 mit überdecken.

Gegen die Fahrtrichtung F schließt bei geschlossenem Dach 2 an den vorderen Dachteil 4 zumindest ein weiterer Dachteil 7 an, der in der Zeichnung den hintersten Dachteil ausbildet und eine Heckscheibe 8 umfaßt, die von seitlichen Säulen 9, häufig auch als C-Säulen bezeichnet, eingefaßt und mit diesen starr verbunden ist.

Der mittlere Dachabschnitt 6 kann eine insgesamt starre oder mit einem starren Rahmen versehene Baueinheit oder einen Lamellen- oder Soft-Top-Bereich bilden. Insbesondere empfiehlt sich für die unten beschriebene Halterung des mittleren Dachabschnitts 6 über oder unter der Heckscheibe 8 eine im wesentlichen transparente Ausbildung.

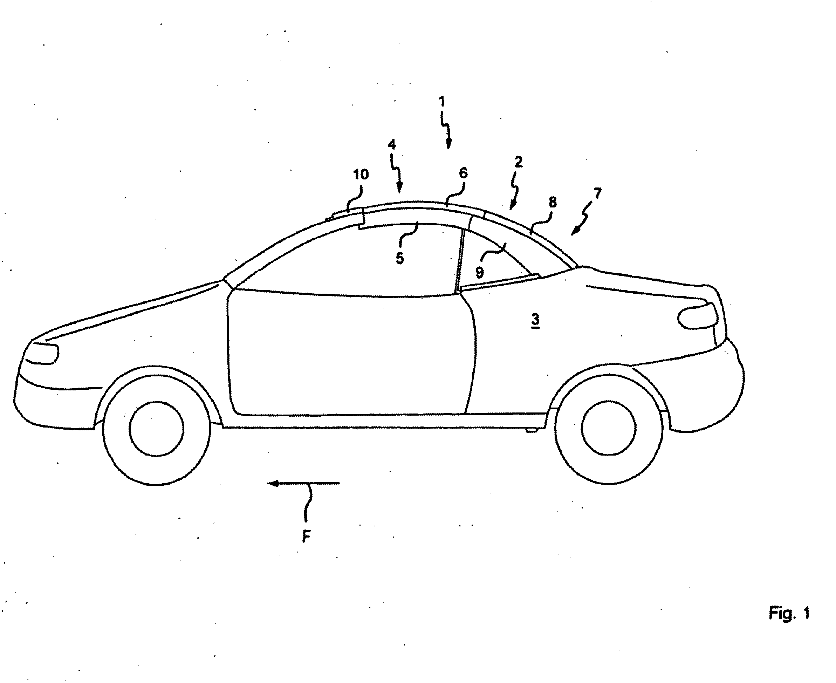

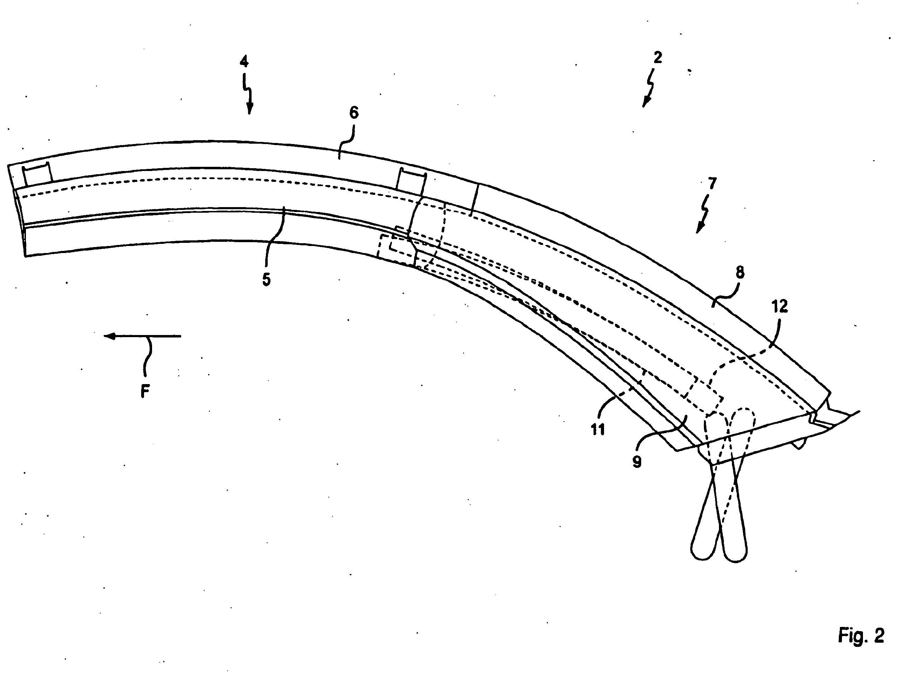

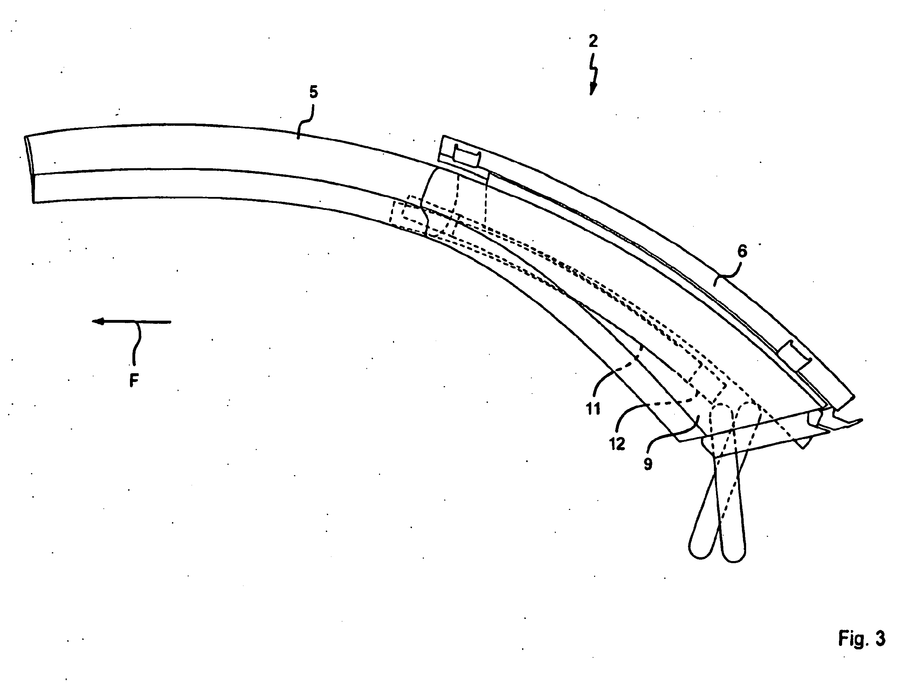

Der mittlere Dachabschnitt 6 ist aus der geschlossenen Dachstellung (Fig. 1, Fig. 2) heraus in eine nach hinten und hier im wesentlichen parallel zu dem dahinter liegenden Dachteil 7 gehaltene Stellung (Fig. 3) verlagerbar, in der die seitlichen Rahmenteile 5 noch in ihrer geschlossenen Ausgangsposition verbleiben, in der sie mittelbar oder unmittelbar mit einem Windschutzscheibenrahmen 10 verriegelt sind. Im gezeichneten Ausfübrungsbeispiel ist der Dachabschnitt 6 dabei oberhalb der Heckscheibe 8 gehalten. Alternativ wäre auch eine Halterung unter der Heckscheibe 8 oder beispielsweise bei einer rollo- oder lamellenartigen Ausbildung auch ein Verlagern über die Heckscheibe 8 hinaus möglich. In jedem Fall wird der Dachabschnitt 6 bei seiner Öffnung vollständig an den dahinter liegenden Dachteil 7 übergeben und ist dann nicht mehr in den seitlichen Rahmenteilen 5 geführt, die bei geschlossenem Dachabschnitt 6 zumindest dessen vordere Führungen aufnehmen.

Aus dieser Öffnung des mittleren Dachabschnitts 6 heraus sind dann die seitlichen Rahmenteile 5 mit einer Komponente abwärts und einer Komponente seitlich einwärts unter den dahinter liegenden Dachteil 7 verlagerbar. Die Verlagerung des Dachabschnitts 6 kann automatisch oder manuell erfolgen. Die so geschaffene Teilöffnungsstellung kann auch eine dauerhafte Fahrstellung bilden, ebenso wie die Stellung mit nur geöffnetem mittlerem Dachabschnitt 6.

Die Verlagerung der Rahmenteile 5 ist hier über reine Schwenkbewegungen bewirkbar. Hierzu sind die seitlichen Rahmenteile 5 an Gestängeteilen 11, 12 gehalten, die an den seitlichen Säulen 9 des dahinter liegenden Dachteils 7 über die Gelenke 11a, 12a schwenkbeweglich angebunden sind und sich von dort aus zu den Rahmenteilen 5 erstrecken, die ihrerseits an den Gestängeteilen 11, 12 über Gelenke 11b, 12b ebenfalls schwenkbeweglich angebunden sind. Dadurch ist insgesamt ein Viergelenk 11a, 12a, 11b, 12b gebildet, wobei grundsätzlich auch andere Mehrgelenke in Frage kommen. Bei geschlossenen, fluchtend zu den Säulen 9 liegenden seitlichen Rahmenteilen 5 liegen die hier lang und als Lenker ausgebildeten Gestängeteile 11, 12 verdeckt innerhalb der Säulen 9.

Alle Gelenke 11a, 11b, 12a, 12b sind reine Schwenkgelenke mit jeweils nur einem Freiheitsgrad. Die Schwenkachsen S1, S2, S3, S4 dieser Gelenke 11a, 11b, 12a, 12b schneiden sich in einem gemeinsamen Punkt 13 und bilden somit insgesamt ein räumliches Getriebe, speziell ein sphärisches Getriebe, für die Bewegung der seitlichen Rahmenteile 5 aus. Dadurch wird es möglich, diese bei geöffnetem vorderem Dachabschnitt 6 gleichzeitig abwärts und heckwärts und auch bezüglich der Fahrzeugquerrichtung einwärts zu verschwenken und dann unter beispielsweise der Heckscheibe 8 zu lagern.

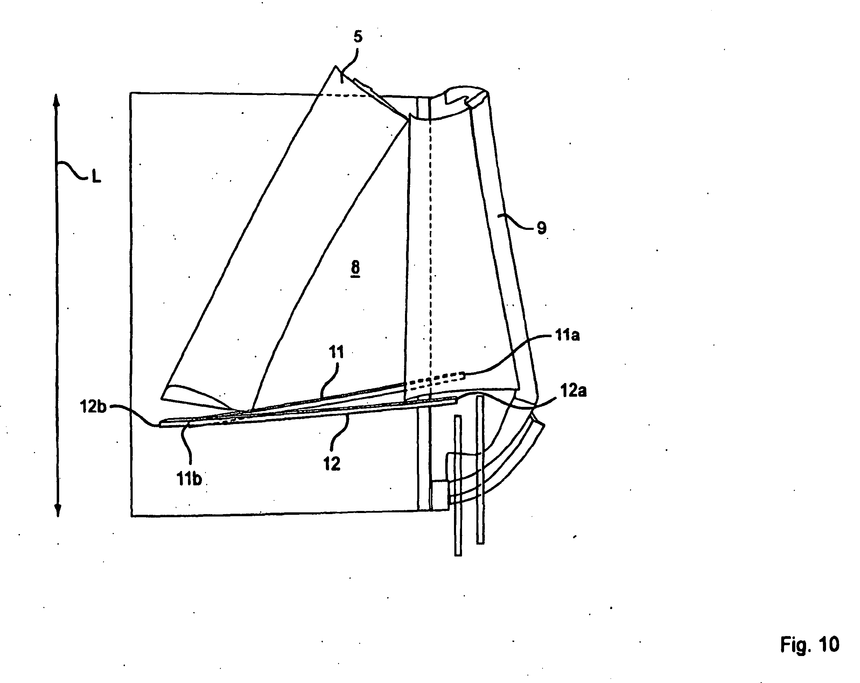

Durch das Einwärtsverschwenken der Gestängeteile 11, 12 um die Gelenke 11a, 12a und das gleichzeitige und eventuell in der Endphase der Bewegung (Übergang von Fig. 9 zu Fig. 10) noch verstärkte Auswärtsverschwenken der Rahmenteile 5 um die Gelenke 11b, 12b geraten die Rahmenteile 5 in der nach hinten verlagerten Teilöffnungsstellung des vorderen Dachteils 4 in eine schräge Anordnung unterhalb der Heckscheibe 8, wobei zumindest am Ende der Teilöffnungsbewegung die seitlichen Rahmenteile 5 raumsparend mit ihren bezüglich der Fahrtrichtung F hinteren Enden weiter der Fahrzeugquermitte zugewandt sind als mit ihren vorderen Enden (Fig. 10). Dadurch wird die in Ablagestellung horizontal im Fahrzeug 1 liegende Länge L des hinteren Dachteils 7 von den seitlichen Rahmenteilen 5 praktisch nicht überragt (Fig. 10). Der benötigte Ablageraum bei weiterer Öffnung auch des hinteren Dachteils 7 ist dadurch verringert. Das Dachteil 7 kann dabei sowohl nach hinten geschwenkt und dann mit der Heckscheibe zuunterst als auch über beispielsweise lang erstreckte Hebel mit seiner Unterkante heckwärts verlagert und dann mit der Heckscheibe 8 nach vorne unten in eine nahezu horizontale Lage schwenken, so daß diese in dem abgelegten Dach 2 dann zuoberst liegt.

Es ist zusätzlich möglich, jedoch nicht zwingend, daß die beiden seitlichen Rahmenteile in ihrem vorderen Bereich über eine Querkopplung miteinander verbunden sind (nicht gezeichnet). Dann würden die Schwenkachsen der Gelenke, die die Rahmenteile 5 mit der Querkopplung, etwa einer quer liegenden Stange kurz hinter dem Windschutzscheibenrahmen 10, verbinden, ebenfalls durch den gemeinsamen Punkt 13 laufen. Dann wird es bei einem vollständig sphärischen Getriebe möglich, nur einen seitlichen Antrieb vorzusehen. Alle Teile des Getriebes, hier also der gesamte vordere Dachteil 4, lassen sich dann zwangsweise synchron bewegen. Insbesondere bei dieser Version kann auch statt der beiden seitlichen Gestängesteile 11, 12 jeweils nur eines vorgesehen werden, so daß dann insgesamt drei Schwenkachsen pro Fahrzeugseite (mit der Achse der Anbindung der Querkopplung an das seitliche Rahmenteil 5) sich im Punkte 13 schneiden. Das so insgesamt gebildete sphärische Sechsgelenk kann dann flüssig und verkantungsfrei bewegt werden.

Das erfindungsgemäße Cabriolet-Fahrzeug 1 kann, wie im gezeichneten Ausführungsbeispiel angedeutet, entweder ein mit zumindest einer Rückbank versehenes vier- oder mehrsitziges Fahrzeug oder auch ein Zweisitzer sein, wobei das Dach 2 insgesamt zu seinem Öffnen und Schließen manuell oder voll- oder teilautomatisch bewegbar sein kann.

## Patentansprüche

1. Kraftfahrzeug (1) mit zumindest einem öffnungsfähigen vorderen Dachteil (4), der seitliche Rahmenteile (5) und einen separaten, bei geschlossenem Dach den in Fahrzeugquerrichtung zwischen den Rahmenteilen (5) liegenden Bereich abdeckenden mittleren Dachabschnitt (6) umfaßt, wobei der mittlere Dachabschnitt (6) aus der geschlossenen Dachstellung heraus nach hinten verlagerbar ist und wobei die seitlichen Rahmenteile (5) aus dieser Dachöffnungsstellung abwärts und heckwärts unter den dahinter liegenden Dachteil verlagerbar sind
und die seitlichen Rahmenteile über seitlichen Säulen des dahinter liegenden Dachteils (7) zugeordneten Gestängeteile (11; 12) mit einer Komponente seitlich einwärts schwenkbar sind **dadurch gekennzeichnet daß** die Gestängeteile (11;12) gegenüber den seitlichen Säulen (9) und die seitlichen Rahmenteile (5) gegenüber den Gestängeteilen (11;12) schwenkbar sind.

2. Kraftfahrzeug (1) nach Anspruch 1,
**dadurch gekennzeichnet,**
**daß** die seitlichen Rahmenteile (5) über Schwenkbewegungen verlagerbar sind.

3. Kraftfahrzeug (1) nach Anspruch 2,
**dadurch gekennzeichnet,**
**daß** die Schwenkachsen (S1;S2) der Gestängeteile (11;12) gegenüber den seitlichen Säulen (9) und die Schwenkachsen (S3;S4) der seitlichen Rahmenteile (5) gegenüber den Gestängeteilen (11;12) sich in einem gemeinsamen Punkt (13) schneiden.

4. Kraftfahrzeug (1) nach einem der Ansprüche 1 bis 3,
**dadurch gekennzeichnet,**
**daß** für die Verlagerung der seitlichen Rahmenteile (5) unter den dahinter liegenden Dachteil (7) ein räumliches Getriebe vorgesehen ist.

5. Kraftfahrzeug (1) nach Anspruch 4,
**dadurch gekennzeichnet,**
**daß** das Getriebe ein sphärisches Getriebe ist.

6. Kraftfahrzeug (1) nach einem der Ansprüche 1 bis 5,
**dadurch gekennzeichnet,**
**daß** die seitlichen Rahmenteile (5) über ein Mehrgelenk (11a;12a;11b;12b) an dem dahinter liegenden Dachteil (7) gehalten sind.

7. Kraftfahrzeug (1) nach Anspruch 6,
**dadurch gekennzeichnet,**
**daß** das Mehrgelenk (11a;12a;11b;12b) als Viergelenk ausgebildet ist und zwei den seitlichen Säulen (9) zugeordnete Gelenke (11a;12a) umfaßt, von denen Gestängeteile (11;12) erstreckt sind, die an ihren den seitlichen Säulen (9) abgewandten Enden an zwei weiteren Gelenken (11b;12b) an den seitlichen Rahmenteilen (5) angreifen.

8. Kraftfahrzeug (1) nach einem der Ansprüche 6 oder 7,
**dadurch gekennzeichnet,**
**daß** alle Gelenke (11a;12a;11b;12b) des Mehrgelenks reine Schwenkgelenke sind.

9. Kraftfahrzeug (1) nach einem der Ansprüche 1 bis 8.
**dadurch gekennzeichnet,**
**daß** die seitlichen Rahmenteile (5) in Teilöffnungsstellung derart schräg liegen, daß sie mit ihren bezüglich der Fahrtrichtung hinteren Enden weiter der Fahrzeugquermitte zugewandt sind als mit ihren vorderen Enden.

10. Kraftfahrzeug (1) nach einem der Ansprüche 1 bis 9,
**dadurch gekennzeichnet,**
**daß** die beiden seitlichen Rahmenteile (5) in ihrem vorderen Bereich über eine Querkopplung miteinander verbunden sind.

11. Kraftfahrzeug (1) nach einem der Ansprüche 1 bis 10,
**dadurch gekennzeichnet,**
**daß** dieses ein Cabriolet-Fahrzeug ist und das Dach (2) aus der Teilöffnungsstellung heraus zu einer vollständigen öffnungsstellung in die Karosserie (3) absenkbar ist.

12. Kraftfahrzeug (1) nach Anspruch 11,
**dadurch gekennzeichnet,**
**daß** der hintere Dachteil (7) in Öffnungsstellung mit seiner Außenseite nach oben weist.

## Claims

1. A vehicle (1) with at least one openable front roof part (4) comprising lateral frame parts (5) and a separate central roof section (6), which covers a portion lying between the frame parts (5) in the transverse direction of the vehicle when the roof is closed, wherein the central roof section (6) is displaceable backwards from the closed roof position and wherein the lateral frame parts (5) are displaceable downwards and rearwards from this roof opening position to a position beneath the roof part that is arranged behind,
and wherein the lateral frame parts are pivotable laterally inward with a component via linkage assembly parts (11; 12) allocated to lateral pillars of the roof part (7) that is arranged behind,
**characterized in that**
the linkage assembly parts (11; 12) are pivotable relative to the lateral pillars (9) and the lateral frame parts (5) are pivotable relative to the linkage assembly parts (11; 12).

2. The vehicle (1) according to claim 1,
**characterized in that**
the lateral frame parts (5) are displaceable by means of pivoting movements.

3. The vehicle (1) according to claim 2,
**characterized in that**
the pivoting axes (S1; S2) of the linkage assembly parts (11; 12) relative to the lateral pillars (9) and the pivoting axes (S3; S4) of the lateral frame parts (5) relative to the linkage assembly parts (11; 12) intersect in a single common point (13).

4. The vehicle (1) according to one of claims 1 to 3,
**characterized in that**
a spatial transmission is provided for displacing the lateral frame parts (5) beneath the roof portion (7) that is arranged behind.

5. The vehicle (1) according to claim 4,
**characterized in that**
the transmission is a spherical transmission.

6. The vehicle (1) according to any one of claims 1 to 5,
**characterized in that**
the lateral frame parts (5) are supported on the roof portion (7) that is arranged behind, via a multiple-joint (11a; 12a; 11b; 12b).

7. The vehicle (1) according to claim 6,
**characterized in that**
the multiple joint (11a; 12a; 11b; 12b) is formed as a four-bar joint and includes two joints (11; 12a) that are allocated to the lateral pillars (9), with linkage assembly parts (11; 12) extending from said joints, which linkage assembly parts act on two further joints (11b; 12b) at the lateral frame parts (5) at their ends that are opposed to the lateral pillars (9).

8. The vehicle (1) according to one of claims 6 or 7,
**characterized in that**
all joints of the multiple-joint (11a; 12a; 11b; 12b) are pure pivoting joints.

9. The vehicle (1) according to one of claims 1 to 8,
**characterized in that**
the lateral frame parts (5) are inclined such in the partially opened position, that they are more allocated with their rear ends with regard to the driving direction to the transverse center line than with their front ends.

10. The vehicle (1) according to one of claims 1 to 9,
**characterized in that**
the front portions of the two lateral frame parts (5) are connected to each other via a cross connection.

11. The vehicle (1) according to one of claims 1 to 10,
**characterized in that**
the vehicle is a convertible vehicle, and the roof (2) is retractable into the car body (3) from a partially opened position to a completely opened position.

12. The vehicle (1) according to claim 11,
**characterized in that**
the outside of the rear roof part (7) is facing upwards in the opening position.

## Revendications

1. Véhicule automobile (1) avec au moins une partie de toit avant (4) ouvrable, qui comprend des éléments de cadre latéraux (5) et une section de toit médiane (6) séparée, couvrant la zone située entre les éléments de cadre (5) dans le sens transversal du véhicule lorsque le toit est fermé, la section de toit médiane (6) pouvant être déplacée de la position de toit fermée vers l'arrière et les éléments de cadre latéraux (5) pouvant être déplacés de cette position d'ouverture du toit vers le bas et vers l'arrière sous la partie de toit située derrière
et les éléments de cadre latéraux pouvant pivoter latéralement vers l'intérieur avec une composante par le biais de tringles (11, 12) associées à des montants latéraux de la partie de toit située derrière (7), **caractérisé en ce que** les tringles (11 ; 12) peuvent pivoter par rapport aux montants latéraux (9) et les éléments de cadre latéraux (5) par rapport aux tringles (11 ; 12).

2. Véhicule automobile (1) selon la revendication 1,
**caractérisé en ce que**
les éléments de cadre latéraux (5) peuvent être déplacés par le biais de mouvements de pivotement.

3. Véhicule automobile (1) selon la revendication 2,
**caractérisé en ce que**
les axes de pivotement (S1 ; S2) des tringles (11 ; 12) par rapport aux montants latéraux (9) et les axes de pivotement (S3 ; S4) des éléments de cadre latéraux (5) par rapport aux tringles (11 ; 12) se coupent en un point commun (13).

4. Véhicule automobile (1) selon l'une quelconque des revendications 1 à 3,
**caractérisé en ce que**
il est prévu une chaîne cinématique spatiale pour le déplacement des éléments de cadre latéraux (5) sous la partie de toit située derrière (7).

5. Véhicule automobile (1) selon la revendication 4,
**caractérisé en ce que**
la chaîne cinématique est une chaîne cinématique sphérique.

6. Véhicule automobile (1) selon l'une quelconque des revendications 1 à 5,
**caractérisé en ce que**
les éléments de cadre latéraux (5) sont maintenus au niveau de la partie de toit située derrière (7) par le biais d'un polygone articulé (11a ; 12a ; 11b ; 12b).

7. Véhicule automobile (1) selon la revendication 6,
**caractérisé en ce que**
le polygone articulé (11a ; 12a ; 11b ; 12b) est réalisé sous forme de quadrilatère articulé et comporte deux articulations (11a ; 12a) associées aux montants latéraux (9), desquelles partent des tringles (11 ; 12), qui s'appliquent au niveau de leurs extrémités opposées aux montants latéraux (9) sur deux autres articulations (11b ; 12b) au niveau des éléments de cadre latéraux (5).

8. Véhicule automobile (1) selon l'une quelconque des revendications 6 ou 7,
**caractérisé en ce que**
toutes les articulations (11a ; 12a ; 11b ; 12b) du polygone articulé sont de simples articulations pivotantes.

9. Véhicule automobile (1) selon l'une quelconque des revendications 1 à 8,
**caractérisé en ce que**
les éléments de cadre latéraux (5) sont inclinés dans la position d'ouverture partielle de telle sorte qu'ils sont tournés davantage vers le milieu transversal du véhicule avec leurs extrémités arrière par rapport au sens de marche qu'avec leurs extrémités avant.

10. Véhicule automobile (1) selon l'une quelconque des revendications 1 à 9,
**caractérisé en ce que**
les deux éléments de cadre latéraux (5) sont reliés l'un à l'autre dans leur zone avant par le biais d'un couplage transversal.

11. Véhicule automobile (1) selon l'une quelconque des revendications 1 à 10,
**caractérisé en ce que**
celui-ci est un véhicule cabriolet et le toit (2) peut être abaissé dans la carrosserie (3) de la position d'ouverture partielle vers une position d'ouverture complète.

12. Véhicule automobile (1) selon la revendication 11,
**caractérisé en ce que**
la partie de toit arrière (7) en position ouverte est dirigée vers le haut avec son côté extérieur.
